# EUROPÄISCHE PATENTSCHRIFT

(11) **EP 1 585 657 B1**
(45) Veröffentlichungstag und Bekanntmachung des Hinweises auf die Patenterteilung: **02.03.2011**
(21) Anmeldenummer: 03773482.9
(22) Anmeldetag: 02.10.2003
(51) Int. Cl.: B60S 1/38

(54) **WISCHVORRICHTUNG FÜR SCHEIBEN VON KRAFTFAHRZEUGEN**
WIPING DEVICE FOR WINDOWS OF MOTOR VEHICLES
DISPOSITIF D'ESSUIE-GLACE DE VEHICULES AUTOMOBILES

(30) Priorität: 19.12.2002 DE 10259478
(43) Veröffentlichungstag der Anmeldung: 19.10.2005
(73) Patentinhaber: ROBERT BOSCH GMBH, 70442 Stuttgart (DE)
(72) Erfinder: OP'T ROODT, Inigo, B-3500 Hasselt (BE); VAN BAELEN, David, B-3020 Herent (BE)
(86) Internationale Anmeldenummer: PCT/DE2003/003276
(87) Internationale Veröffentlichungsnummer: WO 2004/056623

(56) Entgegenhaltungen:
- DE-A- 10 054 235
- DE-A- 19 951 363
- DE-U- 9 116 994
- US-A- 3 626 544
- US-A- 5 493 750
- US-A- 5 933 910
- US-A1- 2002 148 064
- PATENT ABSTRACTS OF JAPAN vol. 1998, no. 05, 30. April 1998 (1998-04-30) -& JP 10 024806 A (MARUENU KK), 27. Januar 1998 (1998-01-27)

## Beschreibung

Die Erfindung betrifft eine Wischvorrichtung für Scheiben von Kraftfahrzeugen mit den im Oberbegriff des Patentanspruchs 1 genannten Merkmalen.

### Stand der Technik

Gelenkfreie Wischblätter für Scheiben von Kraftfahrzeugen sind bekannt. Ein solches Wischblatt besteht typischerweise aus einer Wischleiste, die mittels einer oder zwei Federschiene versteift ist und die eine an der Scheibe anlegbare Wischlippe aufweist. Die Krümmung und die Federeigenschaften der die Wischleiste verstärkenden Federschienen bestimmen maßgeblich die Anpassungsfähigkeit der Wischlippe an die Krümmung der Windschutzscheibe und damit die Wischeigenschaften des Wischblattes. Das Wischblatt ist ungefähr mittig mittels eines Adapters bzw. eines Kupplungsteils lösbar an einem schwenkbaren Wischerarm des Kraftfahrzeugs fixiert.

Bei einer bekannten Variante eines solchen einteiligen gelenkfreien Wischblattes ist eine Wischleiste mit zwei seitlich angebrachten Federschienen versehen, die an ihren beiden Enden jeweils mittels Querstegen einstückig miteinander verbunden sind. Derartige einteilige Wischblätter sind beispielsweise in der DE 296 11 722 U1 und in der DE 100 25 710 A1 beschrieben. Charakteristisch hierbei ist die unlösbare Verbindung der beiden Federschienen mit der Wischleiste.

Aus der US-A-3626544 ist darüber hinaus eine Wischvorrichtung mit den Merkmalen des Oberbegriffs des Anspruchs 1 bekannt.

### Vorteile der Erfindung

Eine Wischvorrichtung für Scheiben von Kraftfahrzeugen gemäß der vorliegenden Erfindung besteht aus einem gelenklosen Wischblatt mit einer Wischleiste, einer daran angeordneten Wischlippe und einem mit dem Wischblatt verbindbaren Kupplungsteil zur lösbaren Verbindung mit einem schwenkbaren Wischerarm des Fahrzeugs. Die Wischleiste weist ein Profil mit Führungsnuten zur seitlichen Aufnahme von zwei Federschienen auf,
die an ihren beiden Enden jeweils miteinander verbunden sind. Die Erfindung sieht vor, dass die Wischleiste eine Verriegelungseinrichtung aufweist, die in einer verriegelten Stellung die Federschienen in der Wischleiste fixiert, und die in einer entriegelten Stellung eine Längsverschiebung der Federschienen in den Führungsnuten der Wischleiste ermöglicht.

Durch eine Betätigung der Verriegelungseinrichtung kann somit das Wischblatt aus Gummi oder einem anderen geeigneten flexiblen Material von den Federschienen getrennt werden und bei Verschleiß separat ausgetauscht werden. Bei herkömmlichen gelenkfreien Wischblättern ist hingegen eine solche Trennung nicht möglich, da die Federschienen fest mit dem Wischblatt verbunden sind und nicht zerstörungsfrei hiervon getrennt werden kön- - nen. Dem gegenüber ermöglicht die Erfindung einen ressourcenschonenden Austausch nur der verbrauchten Komponenten der Wischvorrichtung.

Die Erfindung sieht vor, dass die Verriegelungseinrichtung einen auf einer Oberseite der Wischleiste fixierbaren Befestigungsclip umfasst, der in lösbarer Rastverbindung mit einer die Federschienen verbindenden Verbindungsbrücke zusammen wirkt. Außerden ist der Befestigungsclip mittels in die Führungsnuten eingreifender Laschen und wenigstens eines in die Oberseite eines Basisabschnitts der Wischleiste eindrückbaren Spitzhakens mit der Basisleiste verbindbar. Somit kann der flache Befestigungsclip im verriegelten Zustand die Verbindungsbrücke teilweise untergreifen, wobei er mittels Anschlaghaken und einer Federzunge gegen die Verbindungsbrücke verriegelt ist. Vorzugsweise ist die Verriegelung durch Drücken der elastisch verformbaren Federzunge gegen die Oberseite des Basisabschnitts der Wischleiste lösbar.

Wie bei den herkömmlichen gelenkfreien Wischblättern sind auch hier die Federschienen jeweils an ihren Enden einstückig miteinander verbunden, im vorliegenden Fall mittels einer Verbindungsbrücke. Auf diese Weise ist dafür gesorgt, dass die Federschienen nicht auseinander bewegt werden können und somit jederzeit seitlich fest im Profil der Wischleiste fixiert sind. Gemäß der vorliegenden Erfindung kann die Wischleiste jedoch in Längsrichtung gegen die Federschienen verschoben werden, wenn die Verriegelung des Befestigungsclips mit der Verbindungsbrücke gelöst wird.

Die Verriegelung besteht aus Anschlaghaken des Befestigungsclips, die an einer Kante der Verbindungsbrücke anliegen. An deren gegenüber liegender Kante liegt im verriegelten Zustand die flexible Federzunge an, die durch Drücken nach unten auf die Wischleiste von der Kante weg geschoben werden kann. Hierdurch kann der Befestigungsclip bei einer Längsverschiebung der Wischleiste gegen die Federschienen unter der Verbindungsbrücke hindurch tauchen und die Wischleiste kann in einer Verschiebebewegung in Längsrichtung vollständig von den Federschienen getrennt werden. Hierbei gleiten diese in einer ersten Führungsnut zu beiden Seiten der Wischleiste.

Eine Ausführungsform der Erfindung sieht vor, dass die Verriegelung durch Betätigung eines Sicherungsbügels lösbar ist, der in einer am Ende des Wischblattes befindlichen Kappe gelagert ist. Die Kappe weist einen mit der Federzunge zusammen wirkenden, elastisch verformbaren Rastnocken auf, der beim Abziehen der Kappe die Federzunge betätigt. Der Rastnocken sorgt zudem dafür, dass die Kappe sich nur-durch einen gewissen Kraftaufwand abziehen lässt und nicht während des normalen Betriebs der Wischvorrichtung verloren gehen kann. Falls die Kappe dennoch verloren geht, wird die Verriegelung dadurch nicht automatisch gelöst, sondern kann ggf. manuell gelöst werden.

Die Betätigung der Verriegelungseinrichtung erfolgt bei dieser Ausführungsform durch Entfernen der Kappe vom Wischblatt.

Eine alternative Ausführungsform sieht vor, dass die Verriegelung durch Betätigung eines Sicherungsbügels lösbar ist, der in einer am Ende des Wischblattes befindlichen Kappe gelagert ist. Die Kappe weist hierbei eine leicht veränderte Gestalt und Funktion auf und verbleibt auch bei der Entriegelung am Wischblatt. Zu diesem Zweck ist die Kappe mittels wenigstens eines im Wesentlichen starren Rastnockens an der Verbindungsbrücke fixiert. Die Federzunge ist bei dieser erfindungsgemäßen Ausführungsform beim Verschwenken des Sicherungsbügels durch einen an diesem befmdlichen Entriegelungsbügel betätigbar. Somit ist eine definierte Entriegelung des Befestigungsclips möglich.

Beide alternativen Ausführungsformen können weiterhin vorsehen, dass die Kappe zwei Gleitschienen aufweist, die jeweils in die Führungsnuten der Wischleiste eingreifen. Zur Sicherstellung der erwähnten Funktion ist lediglich eine Verriegelungseinrichtung sowie eine Kappe an einem Ende des Wischblattes erforderlich. Aus optischen Gründen kann jedoch zusätzlich am anderen Ende des Wischblattes eine gleichartige Kappe angebracht sein, die jedoch ohne Funktion ist.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in bevorzugten Ausführungsbeispielen anhand der zugehörigen Zeichnungen näher erläutert. Dabei zeigt:
- Figur 1: eine schematische Seitenansicht einer erfindungsgemäßen Wischvorrichtung,
- Figur 2: eine schematische Draufsicht auf die Wischvorrichtung ge- mäß Figur 1,
- Figur 3: eine perspektivische Detailansicht zweier miteinander ver- bundener Federschienen der Wischvorrichtung,
- Figur 4: eine weitere perspektivische Ansicht der mittels einer Ver- bindungsbrücke verbundenen Federschienen,
- Figur 5: eine perspektivische Detailansicht eines Wischblattes und eines damit verbindbaren Befestigungsclips der Wischvor- richtung,
- Figur 6: eine perspektivische Detailansicht der mit dem Wischblatt verbundenen Federschienen,
- Figur 7: eine erste Variante einer über ein Ende des Wischblattes schiebbaren Kappe in perspektivischer Darstellung,
- Figur 8: eine weitere perspektivische Ansicht der Kappe gemäß Fi- gur 7,
- Figur 9: eine alternative Variante einer über das Wischblatt gescho- benen Kappe,
- Figur 10: eine perspektivische Teilansicht einer von den Federschie- nen entriegelten Wischleiste,
- Figur 11: eine perspektivische Detailansicht des Zusammenwirkens eines Sicherungsbügels mit dem Befestigungsclip,
- Figur 12: eine perspektivische Ansicht der Kappe gemäß Figur 9 und
- Figur 13: eine weitere perspektivische Ansicht der Kappe gemäß Fi- gur 9 mit entferntem Sicherungsbügel.

### Beschreibung der Ausführungsbeispiele

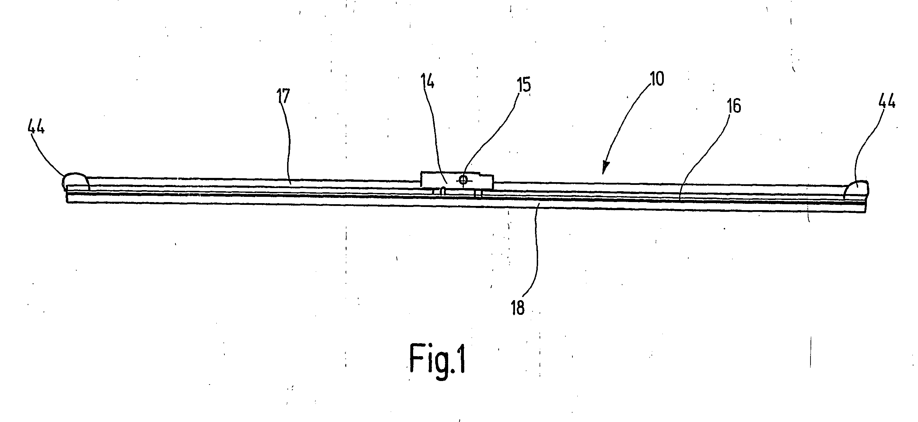

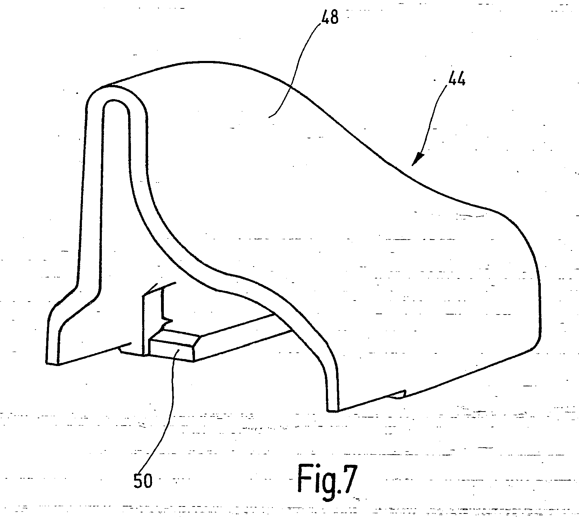

Eine erfindungsgemäße Wischvorrichtung 10 umfasst ein Wischblatt 12, das aus einer Wischleiste 16 und einer einstückig mit dieser ausgebildeten Wischlippe 18 besteht (vgl. Figur 1). Die Wischlippe 18 dient zur Reinigung einer Scheibe eines Kraftfahrzeugs. Ein Kupplungsteil 14 ist ungefähr mittig am Wischblatt 12 angebracht und dient zur lösbaren Verbindung mit einem schwenkbaren Wischerarm (nicht dargestellt). Hierzu weist das Kupplungsteil 14 einen Gelenkbolzen 15 auf, dessen Längsachse senkrecht zur Längserstreckungsrichtung des Wischblatts 12 ausgerichtet ist. Zumindest an einem Ende weist das Wischblatt 12 eine Kappe 44 auf, deren Funktion anhand der Figuren 7 bis 13 näher erläutert wird.

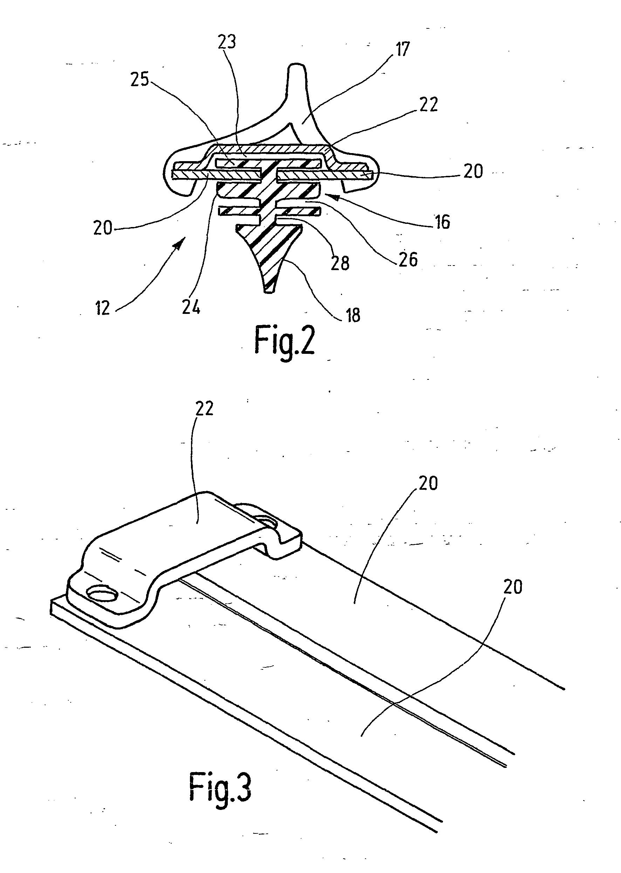

Das Wischblatt 12 weist ein weitgehend symmetrisches Profil mit mehreren, gegenüber liegend angeordneten Führungsnuten 24, 26 auf, die in der Wischleiste 16 unterhalb eines der Wischlippe 18 gegenüber liegenden Basisabschnitts 25 angeordnet sind (vgl. Figur 2). Die unterhalb des Basisabschnitts 25 vorgesehenen ersten Führungsnuten 24 dienen zur Aufnahme zweier Federschienen 20, die für die gewünschte Formstabilität und Elastin zität des Wischblatts 12 beim Überstreichen der Scheibe sorgen. Die Federschienen 20 bestehen jeweils aus einem flachen, bandartigen Element, das einen annähernd rechteckförmigen Querschnitt - aufweist und dass weitgehend nur in paralleler Richtung zu seinen Schmalseiten elastisch verformbar ist. Die Federschienen 20 können je nach Anwendungsfall bereits im entspannten Zustand eine vorgegebene Krümmung aufweisen.

Die beiden Federschienen 20 ragen jeweils aus der ersten Führungsnut 24 und sind an ihren Enden jeweils mittels einer Verbindungsbrücke 22 miteinander verbunden (vgl. Figur 3). Der Abstand der beiden Federschienen 20 wird durch die beiden an den Enden angeschweißten Verbindungsbrücken 22 über ihre gesamte Länge weitgehend konstant gehalten. Federschienen 20 und Verbindungsbrücken 22 können bspw. aus Federstahl bzw. aus einem elastischen Kunststoff bestehen, der vorzugsweise eine Fäserverstärkung aufweist.

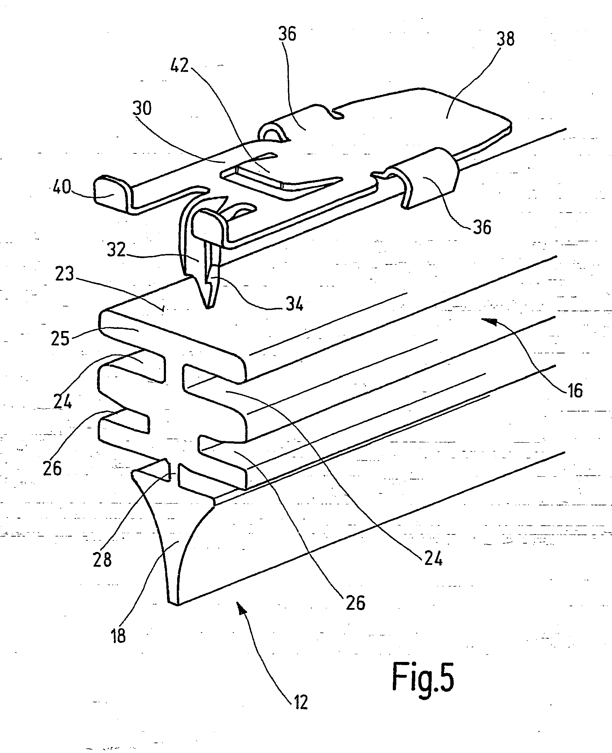

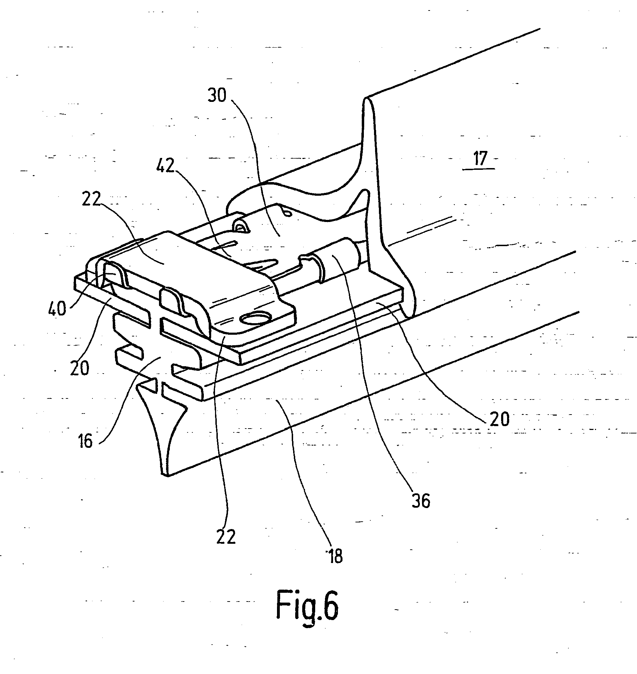

Der Basisabschnitt 25 befindet sich jeweils zwischen den Führungsschienen 20 und der Verbindungsbrücke 22, wobei ein geringer Abstand zum Einschieben eines flachen Befestigungsclips 30 (vgl. Figuren 5 und 6) verbleibt.

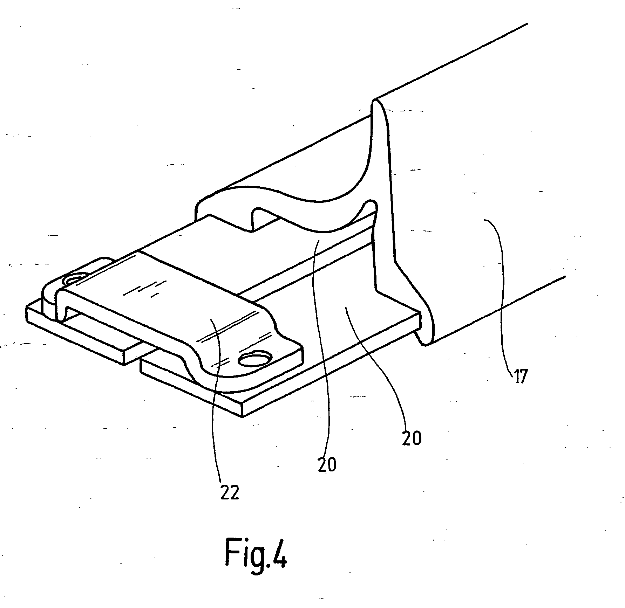

Unterhalb der ersten Führungsnuten 24 sind zweite Führungsnuten 26 erkennbar, in die ggf. eine Spoilerabdeckung 17 eingreifen kann. Im gezeigten Ausführungsbeispiel der Figur 2 umgreift diese allerdings die Wischleiste 16 nur indirekt und ist in den seitlich aus den ersten Führungsnuten 24 ragenden Abschnitten der Federschienen 20 eingehakt (vgl. Figuren 2, 4 und 6), so dass sie auch bei einer Trennung der Wischleiste 16 von den Federschienen 20 an diesen verbleibt. Die Spoilerabdeckung 17 ist optional und kann wahlweise auch entfallen.

Am unteren Ende der Wischleiste 16, unterhalb der zweiten Führungsnuten 26, befindet sich ein mittiger Gelenkabschnitt 28, der eine flexible Verbindung zur Wischlippe 18 darstellt. Die Wischlippe 18 kann somit je nach Wischrichtung des Wischblatts 12 eine eingeschränkte Kippbewegung ausführen.

Der Befestigungsclip 30 kann an einem Ende der Wischleiste 16 angebracht werden, wie dies in Figur 5 verdeutlicht ist. Hierzu weist der scheibenförmige, vorzugsweise aus Metallblech oder aus Kunststoff bestehende Befestigungsclip 30 zwei seitliche Laschen 36 auf, die seitlich um den Basisabschnitt 25 herum gebogen werden können. Weiterhin ist ein Spitzhaken 32 an einem zum Ende der Wischleiste 16 weisenden Bereich erkennbar, der beim Eindrücken des Befestigungsclips 30 senkrecht in die Oberseite 23 des Basisabschnitts 25 eindringt und dort verbleibt. Zur Sicherung dieser Verbindung weist der Spitzhaken 32 zwei Widerhaken 34 auf, die sich im Gummi der Wischleiste 16 verhaken können. Weiterhin sind am gleichen Ende zu beiden Seiten des Spitzhakens 32 zwei kurze, senkrecht nach oben weisende Anschlaghaken 40 erkennbar, die in Zusammenwirkung mit einer, in einem mittleren Bereich des Befestigungsclips 30 angeordneten Federzunge 42 für eine lösbare Verbindung mit einer der Verbindungsbrücken 22 sorgen können. An einem dem Spitzhaken 32 und den Anschlaghaken 40 gegenüber liegenden Ende ist der Clip 30 wie ein Spaten 38 geformt. Diese Kontur des Clips 30 erleichtert die Montage der Wischleiste 16, indem sie das Einschieben des Befestigungsclips 30 unter die Verbindungsbrücke 22 erleichtert.

Figur 6 verdeutlicht eine verriegelte Stellung des Befestigungsclips 30, dessen Anschlaghaken 40 an einer vorderen Kante der Verbindungsbrücke 22 anliegen und dessen entspannte Federzunge 42 an der gegenüber liegenden Kante der Verbindungsbrücke 22 anliegt. Die mit dem Befestigungsclip 30 versehene Wischleiste 16 ist somit fest mit den beiden Federschienen 20 verbunden. Durch die Verriegelung des Clips 30 gegen die Brücke 22 ist jede Längsbewegung der Wischleiste 16 gegen die Federschienen 20 unterbunden. Eine Trennung dieser Teile kann nur dadurch ermöglicht werden, indem die Federzunge 42 nach unten auf die Oberseite 23 des Basisabschnitts 25 gedrückt wird. In dieser Stellung kann die Wischleiste 16 und der Befestigungsclip 30 nach links (entsprechend Figur 6) unter der Verbindungsbrücke 22 heraus gezogen werden.

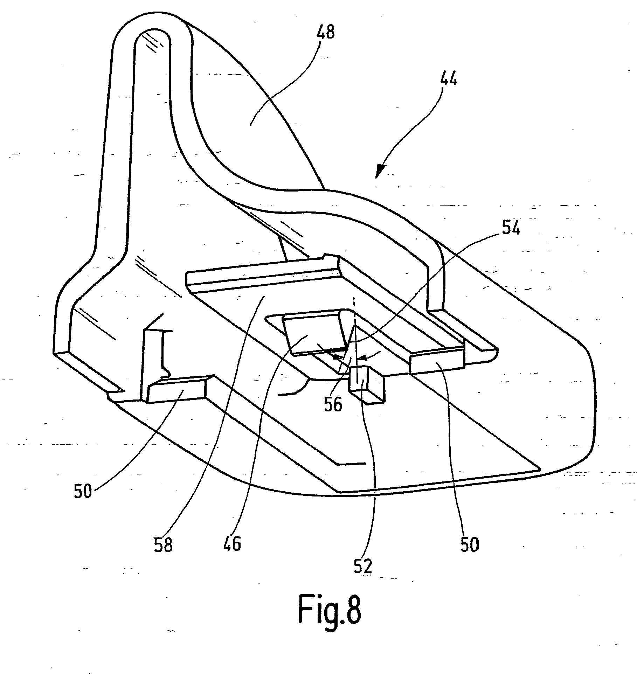

Da die Federzunge 42 relativ schwer zugänglich ist und nur unter Zuhilfenahme von Werkzeug nach unten gedrückt werden kann, sieht die Erfindung eine Betätigungseinrichtung in Gestalt einer Kappe 44 zur leichteren Entriegelung des Clips 30 vor. Die Kappe 44 weist zwei Gleitschienen 50 auf, die in die ersten oder zweiten Führungsnuten 24, 26 eingreifen bzw. die Federschienen 20 umgreifen können. Eine Haube 48 der Kappe 44 ist vorzugsweise der Kontur der Spoilerabdeckung 17 angepasst. Eine erste Variante der Kappe 44 gemäß den Figuren 7 und 8 weist einen elastisch verformbaren Rastnocken 46 auf, der bei vollständig auf das Ende der Wischleiste 16 aufgeschobener Kappe 44 hinter der Federzunge 42 liegt und keine Kraft auf diese ausübt. Die Kappe 44 ist hierbei mit einem Anschlagzapfen 52 gegen die Wischleiste 16 bzw. die Verbindungsbrücke 22 geschoben. Der Rastnocken 46 ist mittels einer Blattfeder elastisch aufgehängt und ragt nach unten aus einer Deckscheibe 58, die durch Aufliegen auf der Verbindungsbrücke 22 einen weiteren Anschlag für die Kappe 44 bilden kann.

Der Rastnocken 46 weist rückseitig eine Rampe 54 mit einem Rampenwinkel 56 von bspw. ca. 75 Grad auf. Ein solcher Rampenwinkel 56 sorgt dafür, dass der Rastnocken 46 über die Verbindungsbrücke 22 gleiten kann und beim Abziehen der Kappe 44 nicht dort blockiert wird. Beim Abziehen der Kappe 44 wird die Federzunge 42 durch den darauf drückenden Rastnocken 46 betätigt, so dass die Wischleiste 16 mit dem darauf fixierten Befestigungsclip 30 durch eine Längsverschiebung von den Federschienen 20 getrennt werden kann. Die Federsteifigkeit der Federzunge 42 muss hierbei geringer sein als die der Aufhängung des Rastnockens 46, damit dieser nicht nach oben gedrückt wird, bevor die Federzunge 42 unter das Niveau der Verbindungsbrücke 22 gedrückt worden ist. Dieser Mechanismus ermöglicht eine einfache Trennung einer Wischleiste 16 mit verbrauchter Wischlippe 18 von den wieder verwendbaren Federschienen 20, ohne dass das gesamte Wischblatt 12 ausgetauscht werden muss.

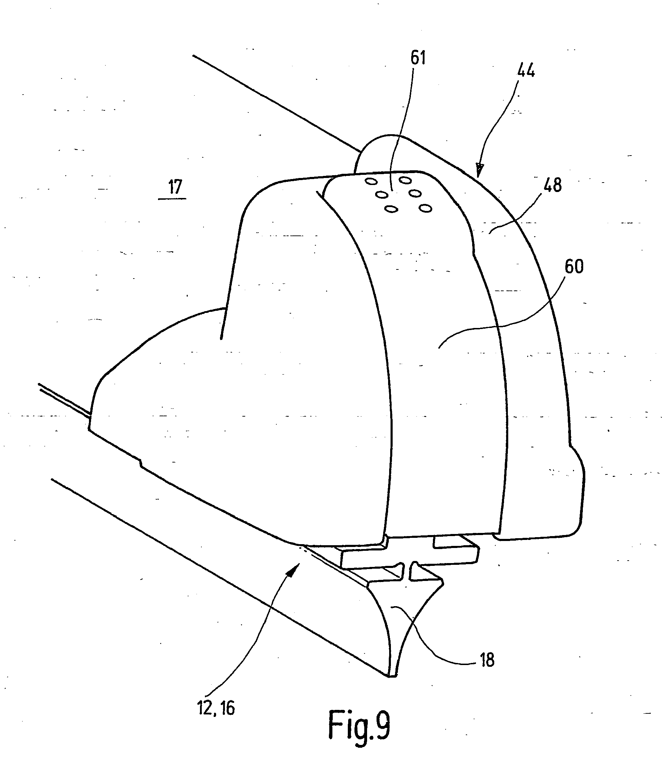

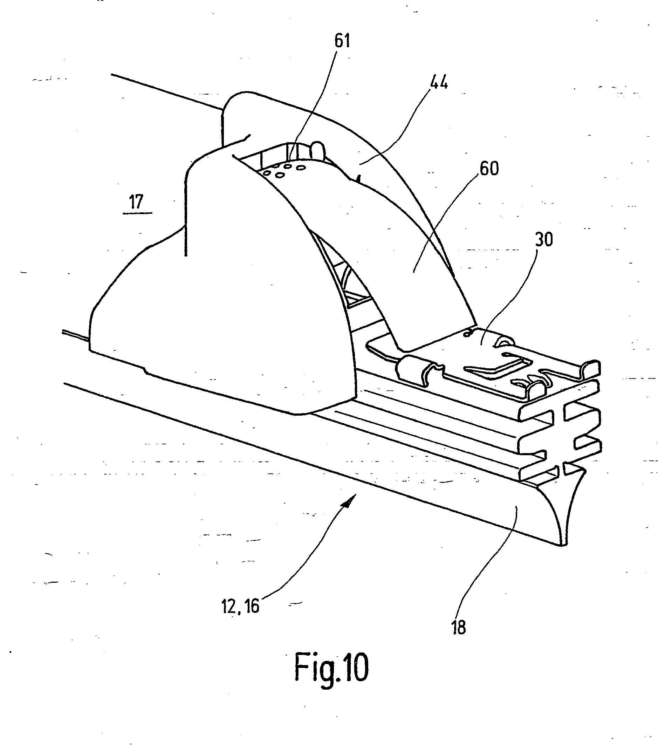

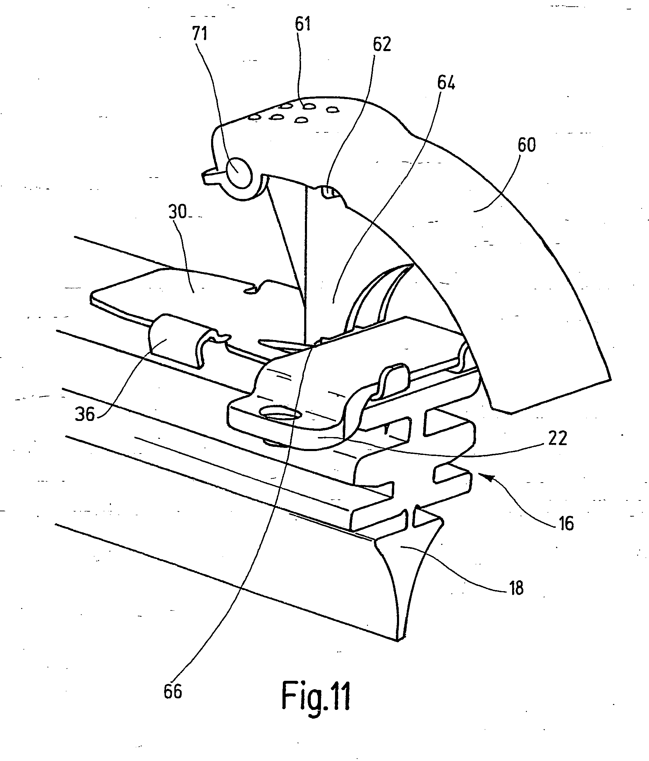

Eine alternative Ausgestaltung einer in der Kappe 44 angeordneten Entriegelungseinrichtung ist in den Figuren 9 bis 13 illustriert. Hierbei weist die Kappe 44 einen schwenkbar gelagerten Sicherungsbügel 60 auf, der in seiner Kontur der gewölbten Oberfläche der Kappe angepasst und in einer länglichen Aussparung 59 um einen beschränkten Winkel von ca. 25 Grad verschwenkt werden kann. Durch Druck auf eine Grifffläche 61 im oberen Bereich des Sicherungsbügels 60 kann dieser aus einer verriegelten Stellung (Figur 9) in eine Entriegelungsstellung (Figuren 10 und 11) gebracht werden.

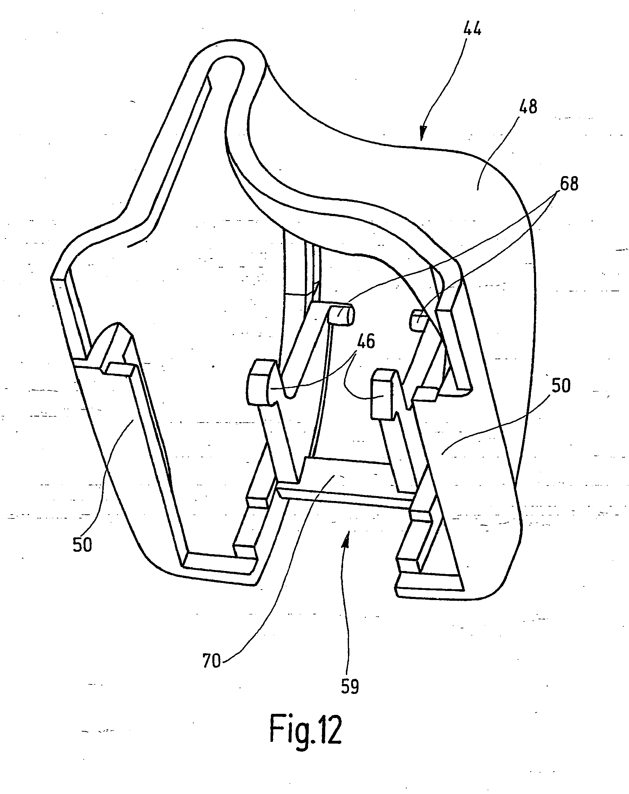

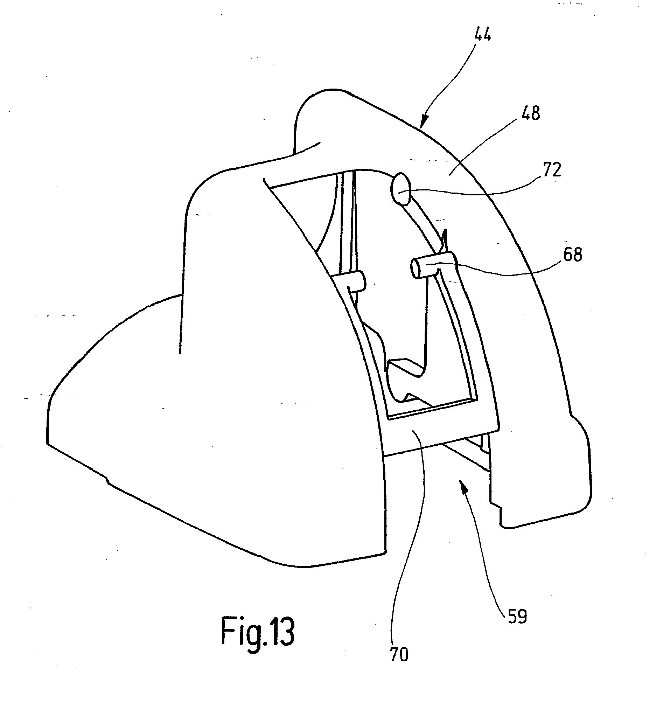

Unterhalb der Grifffläche 61 weist der Sicherungsbügel 60 seitlich zwei Schwenklager 62 auf, die auf Schwenkachsen 68 (vgl. Figuren 12 und 13) der Kappe 44 drehbar gelagert sind. In Höhe der Grifffläche 61 sind jeweils Rastmulden 71 vorgesehen, in die entsprechende Rastvorsprünge 72 der Kappe 44 eingreifen und für eine Rastung des Sicherungsbügels 60 in seiner Grundstellung sorgen. Durch Drücken auf die Grifffläche 61 wird der Bügel 60 verschwenkt, wobei ein in Höhe der Schwenklager 62 nach unten ragender Entriegelungsbügel 64 auf die Federzunge 42 des Befestigungsclips 30 drückt. Eine Anschlagstufe 66 am unteren Ende des Entriegelungsbügels 64 findet einen Anschlag an der Verbindungsbrücke 22, wodurch der Schwenkwinkel des Sicherungsbügels 60 begrenzt wird (vgl. Figur 11).

Figur 10 zeigt den unter der Kappe hindurch tauchenden Befestigungsclip 30, nachdem er durch Betätigung des Bügels 60 entriegelt wurde. Die Kappe 44 bleibt bei dieser alternativen Variante fest mit den Federschienen 20 sowie der Spoilerabdeckung 17 verbunden. Hierzu greifen zwei starre, jeweils neben der Federzunge 42 liegende Rastnocken 46 im Inneren der Kappe 44 an der Verbindungsbrücke 22 an und sorgen für einen festen Sitz der Kappe 44 (vgl. Figur 12). Ein Bügelanschlag 70 bildet einerseits eine Auflage für den verriegelten Bügel 60 und stellt gleichzeitig einen Anschlag für die Kappe 44 dar, da der Bügelanschlag 70 an der den Rastnocken 46 gegenüber liegenden Kante der Verbindungsbrücke 22 anliegt.

Figur 13 verdeutlicht nochmals die zweite Variante der Kappe 44 ohne den in der Aussparung 59 angeordneten Sicherungsbügel 60.

Die gezeigten Kappen 44 können wahlweise an beiden Enden des Wischblattes 12 angebracht sein, wobei jedoch nur eine der Kappen die beschriebenen Funktionen aufweist. Die andere Kappe dient lediglich zur Abdeckung und optischen Verkleidung des eine Verbindungsbrücke aufweisenden Endes des Wischblattes.

## Patentansprüche

1. Wischvorrichtung für Scheiben von Kraftfahrzeugen, bestehend aus einem gelenklosen Wischblatt mit einer Wischleiste, einer daran angeordneten Wischlippe und einem mit dem Wischblatt verbindbaren Kupplungsteil zur lösbaren Verbindung mit einem schwenkbaren Wischerarm des Fahrzeugs, wobei die Wischleiste ein Profil mit Führungsnuten zur seitlichen Aufnahme von zwei Federschiene umfasst, die an ihren beiden Enden jeweils miteinander verbunden sind, wobei die Wischleiste (16) eine Verriegelungseinrichtung aufweist, die in einer verriegelten Stellung die Federschienen (20) in der Wischleiste (16) fixiert, und die in einer entriegelten Stellung eine Längsverschiebung der Federschienen (20) in den Führungsnuten (24) der Wischleiste (16) ermöglicht und die Verriegelungseinrichtung einen auf einer Oberseite (23) der Wischleiste (16) fixierbaren Befestigungsclip (30) umfasst, der in lösbarer Rastverbindung mit einer, die Federschienen (20) verbindenden Verbindungsbrücke (22) zusammen wirkt, **dadurch gekennzeichnet, dass** der Befestigungsclip (30) mittels in die Führungsnuten (24) der Wischleiste (16) eingreifenden Laschen (36) und wenigstens eines in die Oberseite (23) eines Basisabschnitts (25) eindrückbaren Spitzhakens (32) mit der Wischleiste (16) verbindbar ist.

2. Wischvorrichtung nach Anspruch 1, **dadurch gekennzeichnet, dass** der Befestigungsclip (30) in verriegelter Stellung die Verbindungsbrücke (22) teilweise untergreift und mittels Anschlaghaken (40) und einer Federzunge (42) gegen die Verbindungsbrücke (22) verriegelt ist.

3. Wischvorrichtung nach Anspruch 2, **dadurch gekennzeichnet, dass** die Verriegelung durch Drücken der elastisch verformbaren Federzunge (42) gegen die Oberseite (23) das Basisabschnitts (25) der Wischleiste (16) lösbar ist.

4. Wischvorrichtung nach Anspruch 3, **dadurch gekennzeichnet, dass** die Verriegelung durch Entfernen einer Kappe (44) vom Ende des Wischblattes (12) lösbar ist.

5. Wischvorrichtung nach Anspruch 3 oder 4, **dadurch gekennzeichnet, dass** die Kappe (44) einen mit der Federzunge (42) zusammen wirkenden, elastisch verformbaren Rastnocken (46) aufweist, der beim Abziehen der Kappe (44) die Federzunge (42) betätigt.

6. Wischvorrichtung nach Anspruch 3, **dadurch gekennzeichnet, dass** die Verriegelung durch Betätigung eines in einer am Ende des Wischblattes (12) befindlichen Kappe (44) gelagerten Sicherungsbügels (60) lösbar ist.

7. Wischvorrichtung nach Anspruch 6, **dadurch gekennzeichnet, dass** die Federzunge (42) beim Verschwenken des Sicherungsbügels (60) durch einen an diesem befindlichen Entriegelungsbügel (64) betätigbar ist.

8. Wischvorrichtung nach Anspruch 6 oder 7, **dadurch gekennzeichnet, dass** die Kappe (44) mittels wenigstens eines im Wesentlichen starren Rastnockens (46) an der Verbindungsbrücke (22) fixiert ist.

9. Wischvorrichtung nach einem der Ansprüche 4 bis 8, **dadurch gekennzeichnet, dass** die Kappe (44) zwei, jeweils in die Führungsnuten (24) der Wischleiste (16) eingreifende Gleitschienen (50) aufweist.

## Claims

1. Wiping device for windows of motor vehicles, consisting of a hingeless wiper blade with a wiper strip, a wiper lip arranged thereon and a coupling part which can be connected to the wiper blade and is intended for the releasable connection to a pivotable wiper arm of the vehicle, wherein the wiper strip comprises a profile with guide grooves for laterally receiving two spring rails which are connected to each other in each case at both ends thereof, wherein the wiper strip (16) has a locking device which, in a locked position, fixes the spring rails (20) in the wiper strip (16) and which, in an unlocked position, permits longitudinal displacement of the spring rails (20) in the guide grooves (24) of the wiper strip (16), and the locking device comprises a fastening clip (30) which is fixable on the upper side (23) of the wiper strip (16) and, in a releasable latching connection, interacts with a connecting bridge (22) connecting the spring rails (20), **characterized in that** the fastening clip (30) can be connected to the wiper strip (16) by means of tabs (36) engaging in the guide grooves (24) of the wiper strip (16) and by means of at least one pointed hook (32) which can be pressed into the upper side (23) of a base section (25).

2. Wiping device according to Claim 1, **characterized in that**, in the locked position, the fastening clip (30) partially engages under the connecting bridge (22) and is locked against the connecting bridge (22) by means of stop hooks (40) and a spring tongue (42).

3. Wiping device according to Claim 2, **characterized in that** the locking can be released by pressing the elastically deformable spring tongue (42) against the upper side (23) of the base section (25) of the wiper strip (16).

4. Wiping device according to Claim 3, **characterized in that** the locking can be released by removing a cap (44) from the end of the wiper blade (12).

5. Wiping device according to Claim 3 or 4, **characterized in that** the cap (44) has an elastically deformable latching cam (46) which interacts with the spring tongue (42) and, when the cap (44) is pulled off, actuates the spring tongue (42).

6. Wiping device according to Claim 3, **characterized in that** the locking can be released by actuating a securing bow (60) which is mounted in a cap (44) located at the end of the wiper blade (12).

7. Wiping device according to Claim 6, **characterized in that** the spring tongue (42) can be actuated during pivoting of the securing bow (60) by means of an unlocking bow (64) located on the latter.

8. Wiping device according to Claim 6 or 7, **characterized in that** the cap (44) is fixed on the connecting bridge (22) by means of at least one substantially rigid latching cam (46).

9. Wiping device according to one of Claims 4 to 8, **characterized in that** the cap (44) has two sliding rails (50) each engaging in the guide grooves (24) of the wiper strip (16).

## Revendications

1. Dispositif d'essuie-glace pour des vitres de véhicules automobiles, constitué d'un balai d'essuie-glace non articulé avec une raclette de balai d'essuie-glace, une lèvre de balai d'essuie-glace disposée sur celle-ci, et une partie d'accouplement pouvant être connectée au balai d'essuie-glace, pour la connexion desserrable à un bras d'essuie-glace pivotant du véhicule, la raclette de balai d'essuie-glace comprenant un profilé avec des rainures de guidage pour recevoir latéralement deux rails élastiques, qui sont connectés à chaque fois l'un à l'autre à leurs deux extrémités, la raclette de balai d'essuie-glace (16) présentant un dispositif de verrouillage qui, dans une position verrouillée, fixe les rails élastiques (20) dans la raclette de balai d'essuie-glace (16), et qui, dans une position déverrouillée, permet un coulissement longitudinal des rails élastiques (20) dans les rainures de guidage (24) de la raclette de balai d'essuie-glace (16), le dispositif de verrouillage comprenant une pince de fixation (30) pouvant être fixée sur un côté supérieur (23) de la raclette de balai d'essuie-glace (16), qui coopère dans une connexion d'encliquetage desserrable avec un pont de connexion (22) reliant les rails élastiques (20), **caractérisé en ce que** la pince de fixation (30) peut être connectée à la raclette de balai d'essuie-glace (16) au moyen de pattes (36) venant en prise dans les rainures de guidage (24) de la raclette de balai d'essuie-glace (16) et d'au moins un crochet pointu (32) pouvant être enfoncé dans le côté supérieur (23) d'une portion de base (25).

2. Dispositif d'essuie-glace selon la revendication 1, **caractérisé en ce que** la pince de fixation (30) vient en prise en partie sous le pont de connexion (22) dans la position verrouillée et est verrouillée au moyen de crochets de butée (40) et d'une langue à ressort (42) contre le pont de connexion (22).

3. Dispositif d'essuie-glace selon la revendication 2, **caractérisé en ce que** le verrouillage peut être desserré par pression de la langue à ressort (42) déformable élastiquement contre le côté supérieur (23) de la portion de base (25) de la raclette de balai d'essuie-glace (16).

4. Dispositif d'essuie-glace selon la revendication 3, **caractérisé en ce que** le verrouillage peut être desserré en enlevant un capuchon (44) de l'extrémité du balai d'essuie-glace (12).

5. Dispositif d'essuie-glace selon la revendication 3 ou 4, **caractérisé en ce que** le capuchon (44) présente une came d'encliquetage (46) déformable élastiquement coopérant avec la langue à ressort (42), qui actionne la langue à ressort (42) lors du retrait du capuchon (44).

6. Dispositif d'essuie-glace selon la revendication 3, **caractérisé en ce que** le verrouillage peut être desserré par l'actionnement d'un étrier de fixation (60) monté dans un capuchon (44) se trouvant à l'extrémité du balai d'essuie-glace (12).

7. Dispositif d'essuie-glace selon la revendication 6, **caractérisé en ce que** la langue à ressort (42) peut être actionnée lors du pivotement de l'étrier de fixation (60) par un étrier de déverrouillage (64) se trouvant sur celui-ci.

8. Dispositif d'essuie-glace selon la revendication 6 ou 7, **caractérisé en ce que** le capuchon (44) est fixé au moyen d'au moins une came d'encliquetage essentiellement rigide (46) sur le pont de connexion (22).

9. Dispositif d'essuie-glace selon l'une quelconque des revendications 4 à 8, **caractérisé en ce que** le capuchon (44) présente deux rails coulissants (50) venant respectivement en prise dans les rainures de guidage (24) de la raclette de balai d'essuie-glace (16).
